(19) Europäisches Patentamt
European Patent Office
Office européen des brevets

(11) **EP 4 137 246 A1**

(12) **EUROPEAN PATENT APPLICATION**
published in accordance with Art. 153(4) EPC

(43) Date of publication:
**22.02.2023 Bulletin 2023/08**

(21) Application number: **21788983.1**

(22) Date of filing: **09.04.2021**

(51) International Patent Classification (IPC):
**B21D 43/00** (2006.01)    **B21D 43/09** (2006.01)

(52) Cooperative Patent Classification (CPC):
**B21D 43/00; B21D 43/09**

(86) International application number:
**PCT/JP2021/014992**

(87) International publication number:
**WO 2021/210500 (21.10.2021 Gazette 2021/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.04.2020 JP 2020071508**

(71) Applicant: **Sankyo Seisakusho Co.
Tokyo 114-8538 (JP)**

(72) Inventor: **MIURA, Shigeru
Ichinomiya-shi, Aichi 494-8511 (JP)**

(74) Representative: **LifeTech IP
Spies & Behrndt Patentanwälte PartG mbB
Elsenheimerstraße 47a
80687 München (DE)**

(54) **CONTROL DEVICE FOR PLATE FEEDING DEVICE**

(57)    Provided is a control device for a plate feeding device with which the amount of a plate transported to a processing device by the plate feeding device can be measured with high accuracy. This control device 101 for a plate feeding device 201 comprises: a control unit 102 that controls the rotation of a first roll 202 and a second roll 203 of the plate feeding device 201; a transmission unit 103 that transmits an electromagnetic wave 105 toward a plate 100; and a transmission unit 103 that transmits the electromagnetic wave 105 toward the plate 100, wherein the control unit 102 measures the transport speed of the plate 100 during a predetermined period on the basis of the frequency of the electromagnetic wave 106 received by the reception unit 104, and measures the transport amount of the plate 100 on the basis of the transport speed.

FIG. 1

## Description

### TECHNICAL FIELD

The present invention relates to a control device for a plate material feeding device capable of measuring a transport amount of a plate material transported to a processing device by the plate material feeding device with high accuracy.

### BACKGROUND ART

Patent Document 1 discloses a stamping system including a press mechanism, a material feeding mechanism, and a material dispenser. Then, in this stamping system, the material feeding mechanism feeds a material from the material dispenser through the material feeding mechanism to the press mechanism, measures the movement of the material in the material dispenser, and uses this to determine a desired timing of a material release mechanism including a material gripping mechanism which grips the material in cooperation with a feeding drive roll.

### CITATION LIST

### PATENT LITERATURE

PATENT DOCUMENT 1: JP-A-2004-520934

### SUMMARY OF INVENTION

### TECHNICAL PROBLEM

In the stamping system according to Patent Document 1, the material which has been transported from the material dispenser through the material feeding mechanism to the press mechanism moves due to vibration during press processing by the press mechanism. Thus, since the transport amount of the material which has been actually transported to the press mechanism is different from the transport amount of the material which has been transported from the material dispenser, there is a problem that the transport amount of the material which has been transported cannot be measured in the press mechanism. Moreover, since the material does not generally have a mark, such as a scale, for measuring the transport amount of the material which has been transported, there is a problem that the transport amount of the material which has been transported cannot be measured in the press mechanism.

Therefore, an object of the present invention is to solve the above problems and provide a control device for a plate material feeding device capable of measuring in a processing device such as a press device the transport amount of the plate material which has been transported with high accuracy.

### SOLUTION TO PROBLEM

According to an aspect of the present invention, a control device for a plate material feeding device which includes a first roll and a second roll, and is configured to clamp a plate material by the first roll and the second roll and transport the plate material according to the rotation of the first roll and the second roll, includes a control unit for controlling the rotation of the first roll and the second roll, a transmission unit for transmitting an electromagnetic wave toward the plate material, and a reception unit for receiving the electromagnetic wave reflected by the plate material, and the control unit measures a transport speed of the plate material during a predetermined period based on a frequency of the electromagnetic wave received by the reception unit, and measures a transport amount of the plate material based on the transport speed.

According to a specific example of the present invention, in the control device for the plate material feeding device, the control unit measures the transport speed of the plate material by the difference between the frequency of the electromagnetic wave transmitted by the transmission unit and the frequency of the electromagnetic wave received by the reception unit.

According to a specific example of the present invention, in the control device for the plate material feeding device, the transmission unit transmits electromagnetic waves from two directions toward the plate material, the reception unit receives the electromagnetic waves from the two directions reflected by the plate material, and the control unit measures the transport speed of the plate material by the difference between the frequencies of the reflected electromagnetic waves from the two directions.

According to a specific example of the present invention, in the control device for the plate material feeding device, the reception unit transmits a transport speed-related signal based on the frequency of the received electromagnetic wave to the control unit.

According to a specific example of the present invention, in the control device for the plate material feeding device, the transport speed-related signal has a period based on the transport speed of the plate material.

According to a specific example of the present invention, in the control device for the plate material feeding device, when the plate material feeding device transports the plate material, the control unit controls the reception unit so as to transmit the transport speed-related signal to the control unit.

According to a specific example of the present invention, in the control device for the plate material feeding device, when the plate material feeding device transports the plate material, the control unit controls the transmission unit so as to transmit the electromagnetic wave toward the plate material.

According to a specific example of the present invention, in the control device for the plate material feeding device, the control unit controls the transportation of the plate material by the rotation of the first roll and the second roll, and the predetermined period is a period during which the plate material is transported by the rotation of the first roll and the second roll.

According to a specific example of the present invention, the plate material feeding device further includes a release device for releasing the plate material clamped by the first roll and the second roll, and in the control device for the plate material feeding device, the control unit controls the transportation of the plate material by the release device, and the predetermined period is a period during which the plate material is clamped by the first roll and the second roll.

According to a specific example of the present invention, in the control device for the plate material feeding device, the control unit determines the predetermined period based on a state signal from a processing device for processing the plate material transported from the plate material feeding device.

ADVANTAGEOUS EFFECT OF INVENTION

According to the present invention, it is possible to measure in the processing device the transport amount of the plate material which has been transported with high accuracy without using a mark for measuring.

Other objects, features and advantages of the present invention will become apparent from the following description of the embodiments of the present invention taken in conjunction with the accompanying drawings.

BRIEF DESCRIPTION OF DRAWINGS

FIG. 1 is a schematic diagram of a control device for a plate material feeding device as an embodiment of the present invention.
FIG. 2A is a schematic diagram illustrating a reflection of an electromagnetic wave from a plate material as an embodiment.
FIG. 2B is a schematic diagram illustrating a reflection of an electromagnetic wave from a plate material as another embodiment.
FIG. 3 is a timing diagram of a transport speed-related signal as an embodiment.

DESCRIPTION OF EMBODIMENTS

Embodiments according to the present invention will be described with reference to the drawings. However, the present invention is not limited to those embodiments.

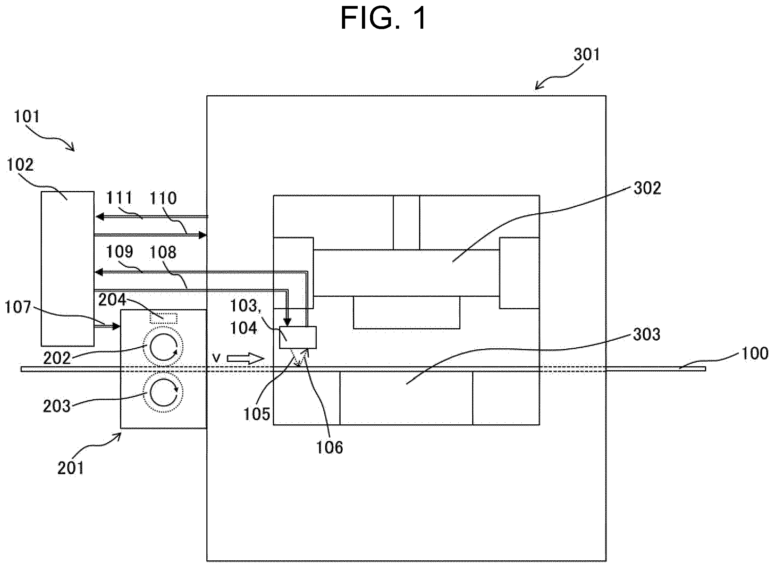

With reference to FIGS. 1 to 3, a control device 101 for a plate material feeding device 201 as an embodiment of the present invention will be described. The plate material feeding device 201 includes a first roll 202 and a second roll 203, and clamps a plate material 100 by the first roll 202 and the second roll 203. As illustrated in FIG. 1, the first roll 202 and the second roll 203 are rotated in the directions of the arrows, and the plate material 100 can be transported in the direction of the arrow according to the rotation of the first roll 202 and the second roll 203. The plate material 100 is transported to a processing device 301 such as a press device by the plate material feeding device 201, and is processed by the processing device 301. The control device 101 includes a control unit 102 for controlling the rotation of the first roll 202 and the second roll 203 of the plate material feeding device 201, a transmission unit 103 for transmitting an electromagnetic wave 105 toward the plate material 100, and a reception unit 104 for receiving the electromagnetic wave 106 reflected by the plate material 100. The control unit 102 is connected to the plate material feeding device 201 via a plate material feeding control signal line 107, and controls the rotation of the first roll 202 and the second roll 203. The control unit 102 measures a transport speed v of the plate material 100 during a predetermined period determined by the control unit 102 based on a frequency of the electromagnetic wave 106 received by the reception unit 104. Subsequently, based on the measured transport speed v of the plate material 100, the control unit 102 measures a transport amount of the plate material 100 transported to the processing device 301 during the predetermined period. Although in FIG. 1, the control unit 102 is provided separately from the plate material feeding device 201 and the processing device 301, the control unit 102 may be built in the plate material feeding device 201 or the processing device 301. Moreover, Although in FIG. 1, the transmission unit 103 and the reception unit 104 are built in the processing device 301, the transmission unit 103 and the reception unit 104 may be built in the plate material feeding device 201 such that the transport amount of the plate material 100 can be measured before or after the plate material 100 passes through the first roll 202 and the second roll 203, and can be provided at a required place. Further, the entire control device 101 may be built in the plate material feeding device 201 which transports the plate material 100, or may be built in the processing device 301 such as the press device which processes the plate material 100 transported from the plate material feeding device 201.

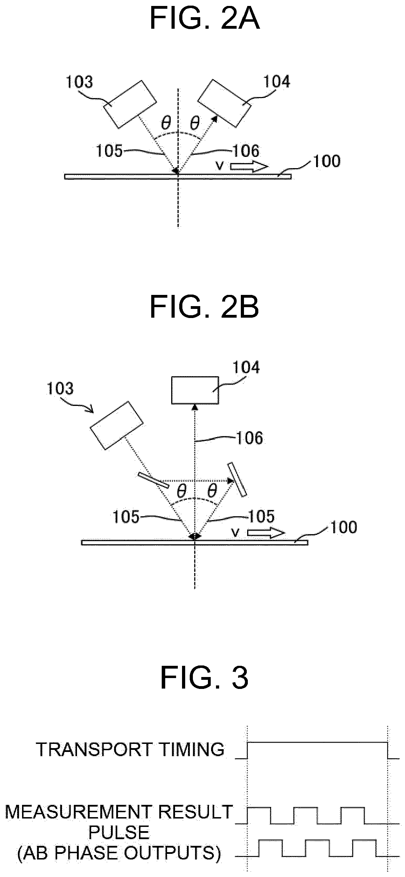

The control unit 102 may measure the transport speed v of the plate material 100 by the difference between the frequency of the electromagnetic wave 105 transmitted by the transmission unit 103 and the frequency of the electromagnetic wave 106 received by the reception unit 104. In FIG. 2A, the transmission unit 103 transmits the electromagnetic wave 105 to the plate material 100 at an incident angle of θ, and the reception unit 104 receives the electromagnetic wave 106 reflected from the plate material 100 at a reflection angle of θ. Assuming that the frequency of the electromagnetic wave 105 transmitted by the transmission unit 103 is $f_T$, and the speeds of the electromagnetic waves 105 and 106 are c, the frequency $f_R$ of the electromagnetic wave 106 received by the reception unit 104 is expressed with the equation (1) by the Doppler effect.
[MATH 1]

$$f_R \sim f_T \left( 1 - \frac{2v}{c} \sin \theta \right) \cdots (1)$$

The control unit 102 performs mixing process to the electromagnetic wave 105 transmitted by the transmission unit 103 and the electromagnetic wave 106 received by the reception unit 104 such that a signal having a frequency of the equation (2) can be obtained from the difference $f_T$ - $f_R$ between the frequencies of these two electromagnetic waves 105 and 106.
[MATH 2]

$$f_T \frac{2v}{c} \sin \theta \cdots (2)$$

The control unit 102 can measure the transport speed v of the plate material 100 from the frequency of the equation (2). Then, by measuring the transport speed v during the predetermined period, a length of the plate material 100 transported during the predetermined period, that is, the transport amount of the plate material 100 transported to the processing device 301 during the predetermined period can be measured. In this way, even if the plate material 100 does not have a mark, such as a scale, for measuring the transport amount, it is possible to measure the transport amount of the plate material 100 by the Doppler effect of the electromagnetic waves.
In FIG. 2B, the transmission unit 103 transmits the electromagnetic waves 105 toward the plate material 100 from two directions. In this case, the transmission unit 103 includes an electromagnetic wave source, a beam splitter, and a mirror. The electromagnetic waves generated from the electromagnetic wave source of the transmission unit 103 are split into two by the beam splitter. One electromagnetic wave 105 is transmitted as it is to the plate material 100 at an incident angle of θ, and the other electromagnetic wave 105 is reflected by the mirror and is transmitted to the plate material 100 at an incident angle of θ opposite to that of the one electromagnetic wave 105. Assuming that the frequency of the electromagnetic waves 105 transmitted by the transmission unit 103 are $f_T$, and the speeds of the electromagnetic waves 105 and 106 are c, the frequency $f_{R1}$ of the electromagnetic wave 106 when the one electromagnetic wave 105 is reflected by the plate material 100 is expressed with the equation (3) by the Doppler effect.
[MATH 3]

$$f_{R1} \sim f_T \left( 1 - \frac{v}{c} \sin \theta \right) \cdots (3)$$

Moreover, the frequency $f_{R2}$ of the electromagnetic wave 106 when the other electromagnetic wave 105 is reflected by the plate material 100 is expressed with the equation (4) by the Doppler effect.
[MATH 4]

$$f_{R2} \sim f_T \left( 1 + \frac{v}{c} \sin \theta \right) \cdots (4)$$

The electromagnetic waves 105 from the two directions are reflected by the plate material 100, and the reception unit 104 receives the different electromagnetic waves 106 having two frequencies, being the electromagnetic waves 106 having the frequency $f_{R1}$ and the electromagnetic wave 106 having the frequency $f_{R2}$. The control unit 102 performs heterodyne process to these two electromagnetic waves 106 received by the reception unit 104 such that a signal having a frequency of the equation (5) can be obtained from the difference $f_{R2}$ - $f_{R1}$ between the frequencies of these two electromagnetic waves 106.
[MATH 5]

$$f_T \frac{2v}{c} \sin \theta \cdots (5)$$

The control unit 102 can measure the transport speed v of the plate material 100 from the frequency of the equation (5). Then, by measuring the transport speed v during the predetermined period, a length of the plate material 100 transported during the predetermined period, that is, the transport amount of the plate material 100 transported to the processing device 301 during the predetermined period can be measured. In this way, even if the plate material 100 does not have a mark, such as a scale, for measuring the transport amount, it is possible to measure the transport amount of the plate material 100 by the Doppler effect of the electromagnetic waves.
The transmission unit 103 is connected to the control unit 102 via an electromagnetic wave control signal line 108, and the reception unit 104 is connected to the control unit 102 via a transport speed-related signal line 109. The reception unit 104 receives the electromagnetic waves 106 having the frequencies such as the equations (1), (3), and (4), which are different from the frequency of the electromagnetic wave 105 transmitted by the transmission unit 103 as described above, and transmits the transport speed-related signal based on the frequency of the received electromagnetic wave 106 via the transport speed-related signal line 109 to the control unit 102. For example, the reception unit 104 may transmit a signal related to the frequency of the received electromagnetic wave 106 such as the equations (1), (3), and (4) via the transport speed-related signal line 109 to the control unit 102, or may transmit a signal related to the mixing process such as the equation (2) or the heterodyne process such as the equation (5) via the transport speed-related signal line 109 to the control unit 102. These signals have a frequency, that is, a period, based on the transport speed v of the plate material 100 such as the equations (1) to (5). In addition, these signals may include an information related to the transport speed v of the plate material 100.

When the plate material feeding device 201 transports the plate material 100, the control unit 102 may control the reception unit 104 so as to transmit the transport speed-related signal to the control unit 102. Moreover, when the plate material feeding device 201 transports the plate material 100, the control unit 102 may control the transmission unit 103 so as to transmit the electromagnetic wave 105 toward the plate material 100. When the plate material feeding device 201 starts transporting the plate material 100, as illustrated in FIG. 3, the control unit 102 controls the transmission unit 103 so as to set a transport timing to H level via the electromagnetic wave control signal line 108 to transmit the electromagnetic wave 105 to the plate material 100. The reception unit 104 receives the electromagnetic wave 106 reflected by the plate material 100, and transmits a measurement result pulse, which is a transport speed-related signal, via the transport speed-related signal line 109 to the control unit 102. The measurement result pulse may be AB phase outputs, the phases of which are shifted by 90 ° with respect to each other as illustrated in FIG. 3. The measurement result pulse has a frequency based on the transport speed v of the plate material 100. The frequency becomes higher as the transport speed v of the plate material 100 becomes faster, and the frequency becomes lower when the transport speed v of the plate material 100 becomes slower. The transport amount of the plate material 100 transported to the processing device 301 is measured based on the measurement result pulse. Moreover, when the plate material feeding device 201 completes transporting the plate material 100, as illustrated in FIG. 3, the control unit 102 controls the transmission unit 103 so as to set the transport timing to L level via the electromagnetic wave control signal line 108 to stop transmitting the electromagnetic wave 105 to the plate material 100. In this way, it is possible to measure the transport speed v of the plate material 100 during a period during which the transport timing is set to H level, and it is possible to measure the transport amount of the plate material 100 transported to the processing device 301.

In addition, the control unit 102 may directly transmit the transport timing to the reception unit 104. In this case, when the control unit 102 sets the transport timing to H level, the reception unit 104 transmits the transport speed-related signal via the transport speed-related signal line 109 to the control unit 102, and when the control unit 102 sets the transport timing to L level, the reception unit 104 stops transmitting the transport speed-related signal to the control unit 102. Moreover, the control unit 102 does not have to transmit the transport timing to the transmission unit 103 and the reception unit 104. In this case, although the reception unit 104 constantly transmits the transport speed-related signal via the transport speed-related signal line 109 to the control unit 102, the control unit 102 extracts a period during which the transport timing is set to H level, from the transport speed-related signal, for the entire period, transmitted from the reception unit 104, to measure the transport speed v of the plate material 100 based on the transport speed-related signal during the extracted period. Subsequently, based on measured the transport speed v of the plate material 100, the transport amount of the plate material 100 transported to the processing device 301 during the extracted period is measured.

The control unit 102 controls the transportation of the plate material 100 by the rotation of the first roll 202 and the second roll 203 by controlling the rotation of the first roll 202 and the second roll 203 of the plate material feeding device 201 via the plate material feeding control signal line 107. The predetermined period during which the transport amount of the plate material 100 transported to the processing device 301 is measured may be a period during which the plate material 100 is transported by the rotation of the first roll 202 and the second roll 203.

The plate material feeding device 201 may further include a release device 204 for releasing the plate material 100 clamped by the first roll 202 and the second roll 203. The release device 204 may be connected to either the first roll 202 or the second roll 203, and the release device 204 raises and lowers the first roll 202 and/or the second roll 203 to clamp and release the plate material 100. The control unit 102 controls the transportation of the plate material 100 by controlling the release device 204 via the plate material feeding control signal line 107. The predetermined period during which the transport amount of the plate material 100 transported to the processing device 301 is measured may be a period during which the plate material 100 is clamped by the first roll 202 and the second roll 203.

The processing device 301 processes the plate material 100 which has been transported from the plate material feeding device 201. When the processing device 301 is the press device, the processing device 301 includes an upper mold 302 and a lower mold 303, and the plate material 100 is punched out by the cooperation of the upper mold 302 and the lower mold 303. When the process such as punch out process is performed by the processing device 301, it is necessary to stop transporting the plate material 100. Thus, the processing device 301 transmits a state signal regarding a state of the processing device 301, that is, a signal indicating whether the plate material 100 should be transported or the transport of the plate material 100 should be stopped, via a state signal line 111 to the control unit 102. Based on the signal from the processing device 301, the control unit 102 determines a period during which the first roll 202 and the second roll 203 are rotated, a period during which the first roll 202 and the second roll 203 clamp the plate material 100, or the like, and further, as described above, determines the predetermined period during which the transport amount of the plate material 100 transported to the processing device 301 is measured. The transport amount of the plate material 100 measured by the control unit 102 may be transmitted via a transport amount signal line 110 to the processing device 301, or may be displayed on a display device such as a display.

The plate material feeding device 201 intermittently transports the plate material 100 to the processing device 301 by a fixed amount, and the control device 101 of the present invention can measures the transport amount of the plate material 100 transported to the processing device 301 by the plate material feeding device 201 with high accuracy. Then, the measured transport amount of the plate material 100 can be used to adjust the transport speed of the plate material 100 transported to the processing device 301, the transport amount of the plate material 100 transported to the processing device 301, a stop position of the plate material 100 stopped in the processing device 301, and the like.

It should be further understood by persons skilled in the art that although the foregoing description has been made on embodiments of the present invention, the present invention is not limited thereto and various changes and modifications may be made without departing from the principle of the present invention and the scope of the appended claims.

REFERENCE SIGNS LIST

| 100 | plate material |
| 101 | control device |
| 102 | control unit |
| 103 | transmission unit |
| 104 | reception unit |
| 105 | transmitted electromagnetic wave |
| 106 | reflected electromagnetic wave |
| 107 | plate material feeding control signal line |
| 108 | electromagnetic wave control signal line |
| 109 | transport speed-related signal line |
| 110 | transport amount signal line |
| 111 | state signal line |
| 201 | plate material feeding device |
| 202 | first roll |
| 203 | second roll |
| 204 | release device |
| 301 | processing device |
| 302 | upper mold |
| 303 | lower mold |

**Claims**

1. A control device for a plate material feeding device comprising a first roll and a second roll, the plate material feeding device configured to clamp a plate material by the first roll and the second roll and transport the plate material according to the rotation of the first roll and the second roll; the control device comprising:

   a control unit for controlling the rotation of the first roll and the second roll;
   a transmission unit for transmitting an electromagnetic wave toward the plate material; and
   a reception unit for receiving the electromagnetic wave reflected by the plate material; wherein the control unit measures a transport speed of the plate material during a predetermined period based on a frequency of the electromagnetic wave received by the reception unit, and measures a transport amount of the plate material based on the transport speed.

2. The control device according to claim 1, wherein the control unit measures the transport speed of the plate material by the difference between the frequency of the electromagnetic wave transmitted by the transmission unit and the frequency of the electromagnetic wave received by the reception unit.

3. The control device according to claim 1, wherein the transmission unit transmits electromagnetic waves from two directions toward the plate material, the reception unit receives the electromagnetic waves from the two directions reflected by the plate material, and the control unit measures the transport speed of the plate material by the difference between the frequencies of the reflected electromagnetic waves from the two directions.

4. The control device according to any one of claims 1 to 3, wherein the reception unit transmits a transport speed-related signal based on the frequency of the received electromagnetic wave to the control unit.

5. The control device according to claim 4, wherein the transport speed-related signal has a period based on the transport speed of the plate material.

6. The control device according to claim 4 or 5, wherein when the plate material feeding device transports the plate material, the control unit controls the reception unit so as to transmit the transport speed-related signal to the control unit.

7. The control device according to any one of claims 4 to 6, wherein when the plate material feeding device transports the plate material, the control unit controls the transmission unit so as to transmit the electromagnetic wave toward the plate material.

8. The control device according to any one of claims 1 to 7, wherein the control unit controls the transportation of the plate material by the rotation of the first roll and the second roll, and the predetermined period is a period during which the plate material is transported by the rotation of the first roll and the second roll.

9. The control device according to any one of claims 1 to 7, wherein the plate material feeding device further comprises a release device for releasing the plate material clamped by the first roll and the second roll, the control unit controls the transportation of the plate material by the release device, and the predetermined period is a period during which the plate material is clamped by the first roll and the second roll.

10. The control device according to any one of claims 1 to 9, wherein the control unit determines the predetermined period based on a state signal from a processing device for processing the plate material transported from the plate material feeding device.

FIG. 1

EP 4 137 246 A1

# FIG. 2A

# FIG. 2B

# FIG. 3

TRANSPORT TIMING

MEASUREMENT RESULT
PULSE
(AB PHASE OUTPUTS)

**INTERNATIONAL SEARCH REPORT**

| International application No. |
| --- |
| PCT/JP2021/014992 |

**A. CLASSIFICATION OF SUBJECT MATTER**
Int.Cl. B21D43/00(2006.01)i, B21D43/09(2006.01)i
FI: B21D43/00H, B21D43/09F

According to International Patent Classification (IPC) or to both national classification and IPC

**B. FIELDS SEARCHED**

Minimum documentation searched (classification system followed by classification symbols)
Int.Cl. B21D43/00, B21D43/09

Documentation searched other than minimum documentation to the extent that such documents are included in the fields searched
Published examined utility model applications of Japan    1922-1996
Published unexamined utility model applications of Japan    1971-2021
Registered utility model specifications of Japan    1996-2021
Published registered utility model applications of Japan    1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2004-520934 A (VAMCO INTERNATIONAL INC.) 15 July 2004 (2004-07-15), claims 1-42, paragraphs [0012]-[0026], fig. 1-6 | 1-10 |
| Y | JP 2017-181489 A (SEIKO EPSON CORPORATION) 05 October 2017 (2017-10-05), claims 1-15, paragraphs [0024]-[0178], fig. 1-26 | 1-10 |
| A | JP 2003-112224 A (AMADA ENG CENTER CO., LTD.) 15 April 2003 (2003-04-15), paragraphs [0009]-[0025], fig. 1-8 | 1-10 |
| A | Microfilm of the specification and drawings annexed to the request of Japanese Utility Model Application No. 130096/1987 (Laid-open No. 35490/1989) (NISSAN MOTOR CO., LTD.) 03 March 1989 (1989-03-03), page 7, line 6 to page 11, line 12, fig. 1-5 | 1-10 |

☒ Further documents are listed in the continuation of Box C.     ☒ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 07 June 2021 | 22 June 2021 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

| International application No. |
| --- |
| PCT/JP2021/014992 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 5-245555 A (AIDA ENG LTD.) 24 September 1993 (1993-09-24), paragraphs [0010]-[0045], fig. 1-7 | 1-10 |

Form PCT/ISA/210 (second sheet) (January 2015)

INTERNATIONAL SEARCH REPORT
Information on patent family members

International application No.

PCT/JP2021/014992

| | | | |
|---|---|---|---|
| JP 2004-520934 A | 15 July 2004 | US 2007/0262114 A1<br>fig. 1-6<br>US 2007/0262333 A1<br>US 2010/0044409 A1<br>US 2004/0069105 A1<br>WO 2002/045943 A2<br>EP 1349723 A2<br>AU 4150002 A<br>CN 1481330 A | |
| JP 2017-181489 A | 05 October 2017 | US 2017/0279977 A1<br>fig. 1-16<br>CN 107229117 A | |
| JP 2003-112224 A | 15 April 2003 | (Family: none) | |
| JP 64-35490 U1 | 03 March 1989 | (Family: none) | |
| JP 5-245555 A | 24 September 1993 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004520934 A